Europäisches Patentamt

European Patent Office

Office européen des brevets

(11) Veröffentlichungsnummer: **0 133 624**
**A1**

(12) # EUROPÄISCHE PATENTANMELDUNG

(21) Anmeldenummer: **83108052.8**

(51) Int. Cl.⁴: **B 01 D 39/12**
**D 03 D 13/00**

(22) Anmeldetag: **16.08.83**

(43) Veröffentlichungstag der Anmeldung:
**06.03.85 Patentblatt 85/10**

(84) Benannte Vertragsstaaten:
**CH DE FR GB LI NL**

(71) Anmelder: **Dürener Metalltuch Schoeller, Hoesch GmbH u. Co. KG**
**Postfach 447**
**D-5160 Düren(DE)**

(72) Erfinder: **Sautter, Peter, Dipl.-Ing.**
**D-5160 Düren**
**Heinrich-Gossen-Strasse 8(DE)**

(74) Vertreter: **Marx, Lothar, Dr.**
**Pirmaterstrasse 3a**
**D-8000 München 70(DE)**

(54) **Filtergewebe aus Metalldrähten.**

(57) Ein Filtergewebe aus Metalldrähten weist dickere, parallel im Abstand zueinander verlaufende Kettdrähte (12) sowie dünnere, die Kettdrähte (12) abwechselnd an der Ober- und Unterseite umschlingende, eng nebeneinander angeordnete Schußdrähte (14) aus einem relativ weichen Metall, insbesondere einem rostfreiem Stahl, auf. Die Dicke (d) der Schußdrähte (14) ist größer, und zwar zweckmäßigerweise 1,5 mal größer als der Abstand ($\mu$) zwischen zwei benachbarten Schußdrähten (14). Dadurch lassen sich Filtergewebe mit extrem kleinen Filteröffnungen auch mit relativ dicken Schußdrähten realisieren, wobei die Schußdrähte (14) in den sich kreuzenden Drahtlagen so stark verformt werden, daß die Schußdrähte nebeneinander Platz haben.

FIG.1

EP 0 133 624 A1

Anwaltsakte 6103/EU

11. Aug. 1983

Filtergewebe aus Metalldrähten

## Beschreibung

Die Erfindung betrifft ein Filtergewebe aus Metalldrähten
der im Oberbegriff des Anspruchs 1 angegebenen Gattung.

Aus der DE-PS 884 927 sind Tressengewebe bekannt, bei denen die dicken Kettdrähte geradlinig und die dünnen Schußdrähte wellenförmig, die   tdrähte umschlingend verlaufen. Dabei werden der freie Filterquerschnitt sowie die Filterfeinheit bestimmt durch die Größe der Öffnungen in den Zwickeln des Filtergewebes, die jeweils an einen dickeren Kettdraht und zwei nebeneinander liegenden, dünneren Schußdrähten gebiltet werden.

Nachteilig ist bei einem solchen Filtergewebe, daß sie relativ teuer sind; außerdem ist der Durchsatz, nämlich die Summe aller Filteröffnungen, im Verhältnis zur Fläche des Filtergewebes relativ klein.

Ein Filtergewebe der angegebenen Gattung geht aus der DE-OS 2 454 390 hervor und weist dicke, parallel und im Abstand zueinander verlaufende Kettdrähte sowie dünne, die Kettdrähte

- 2 -

abwechselnd an der Ober- und Unterseite umschlingende, also etwa wellenförmig verlaufende und eng nebeneinander angeordnete Schußdrähte auf. Dabei ist der Durchmesser der dünnen Schußdrähte kleiner als das 1,2 fache des Durchmessers der größten, durch die Zwickelöffnung des Filtergewebes gelangenden Meßkugel, wodurch das Verhältnis des Durchgangsquerschnittes zur Fläche des Filtergewebes günstiger wird als bei dem Tressengewebe nach der DE-PS 884 927.

Dieses bekannte Filtergewebe hat jedoch den folgenden Nachteil: Da der Durchmesser der dünnen Schußdrähte wesentlich kleiner als der Durchmesser der Meßkugel ist, müssen zur Herstellung von Filtergeweben mit extrem kleinen Öffnungen Schußdrähte mit entsprechend geringem Durchmesser verwebt werden. Solche, sehr dünnen Drähte, insbesondere Metalldrähte, sind jedoch sehr teuer in der Herstellung und sehr störungsanfällig beim Weben, d. h., diese dünnen Schußdrähte reißen beim Weben sehr oft, so daß häufige Wartungsarbeiten erforderlich sind. Schließlich haben die aus so dünnen Schußfäden hergestellten Filtergewebe eine geringe mechanische Festigkeit, so daß sie für viele Anwendungen mit starker mechanischer Beanspruchung nicht geeignet sind.

In diesem Zusammenhang wird darauf hingewiesen, daß die Festigkeit von Filtergeweben aus der Querschnittsfläche des Drahtes einerseits und der Zahl der Drähte pro Längeneinheit andererseits ermittelt wird. Extrem dünne Schußfäden führen zu einer geringen Querschnittsfläche des Drahtes und damit zu einer entsprechend geringen mechanischen Festigkeit.

Der Erfindung liegt deshalb die Aufgabe zugrunde, ein Filtergewebe aus Metalldrähten der angebebenen Gattung zu schaffen, bei dem die oben erwähnten Nachteile nicht auftreten.

Insbesondere soll ein Filtergewebe vorgeschlagen werden,
das einerseits sehr kleine Filteröffnungen hat und andererseits aus relativ dicken, nicht so teueren Schußdrähten
hergestellt werden kann.

Dies wird erfindungsgemäß durch die im kennzeichnenden
Teil des Anspruchs 1 angegebenen Merkmale erreicht.

Zweckmäßige Ausführungsformen sind in den Unteransprüchen
angegeben.

Die mit der Erfindung erzielten Vorteile beruhen insbesondere darauf, daß die dünnen Schußdrähte dicker als die
Gewebeöffnungen sind, die sich zwischen zwei benachbarten
Schußdrähten ergeben. Diese relativ dicken Schußdrähte
sind nicht so kostspielig, so daß sich eine merkliche Verringerung der Herstellungskosten eines solchen Filtergewebes ergibt. Außerdem lassen sich die dickeren Schußdrähte besser verweben, ohne daß es zu den oben erwähnten
Störungen kommt. Und schließlich hat das aus diesen dickeren
Schußdrähten hergestellte Filtergewebe eine höhere Festigkeit, so daß es bei der Benützung auch extremen Beanspruchungen gewachsen ist.

Trotz dieser Vorteile lassen sich mit diesem Filtergewebe
extrem kleine Filteröffnungen erreichen, wie sie für viele
Anwendungszwecke benötigt werden.

Zur Herstellung dieses Filtergewebes werden die Schußdrähte
so dicht gewebt, daß der Abstand zwischen zwei benachbarten
Schußdrähten der gewünschten Filteröffnung entspricht.
Durch diese räumliche Anordnung wird jedoch die Teilung,
d. h., der Abstand zwischen der Mitte eines Schußdrahtes
und der Mitte des Zwischenraumes zwischen zwei Schußdrähten, kleiner als der Durchmesser der Schußdrähte. Um die relativ dicken Schußdrähte also in dieser Weise anordnen zu können, müssen die Drähte an ihren Kreuzungspunkten in der Gewebemitte so stark verformt werden, daß auch diese relativ dikken Schußdrähte nebeneinander Platz haben.

Dies läßt sich in der Praxis ohne Probleme realisieren, wie durch Versuche mit relativ weichen Metalldrähten, insbesondere auf der Basis von rostfreiem Stahl, nachgewiesen werden konnte.

An ihren Kreuzungspunkten haben also die verformten Schußdrähte eine vom Kreisquerschnitt abweichende, etwas ovale Form, wodurch die angestrebte dichte Packung der Schußdrähte und gleichzeitig die extrem kleinen Filteröffnungen möglich werden.

Es hat sich als zweckmäßig herausgestellt, wenn der Durchmesser der Schußdrähte mindestens 1,5 mal so groß wie der Abstand zwischen zwei benachbarten Schußdrähten ist, da sich hierdurch eine Optimierung zwischen den angestrebten, hohen Dicken der Schußdrähte einerseits und den extrem kleinen Filteröffnungen andererseits ergibt.

Die Erfindung wird im folgenden anhand eines Ausführungsbeispiels unter Bezugnahme auf die beiliegenden, schematischen Zeichnungen näher erläutert. Es zeigen

Fig. 1 eine Draufsicht auf zwei Kettdrähte und vier Schußdrähte eines Filtergewebes,

Fig. 2 einen Schnitt längs der Linie A-A von Figur 1 und

Fig. 3 einen Schnitt längs der Linie B-B von Figur 1.

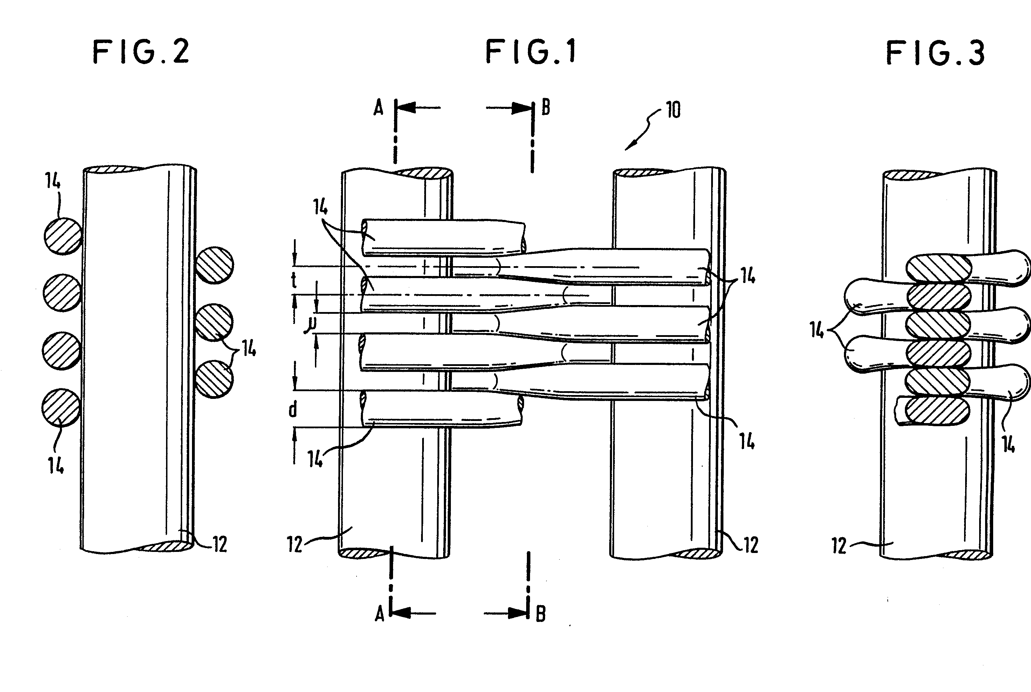

Wie man in Figur 1 erkennt, weist ein allgemein durch das Bezugszeichen 10 angedeutetes Filtergewebe relativ dicke, parallel im Abstand zueinander verlaufende Kettdrähte aus Metall auf. Diese Kettdrähte 12 sind in der üblichen Weise in einer Ebene angeordnet und werden wellenförmig von relativ dünnen Schußdrähten 14 aus einem weichen Metall, insbesondere einem weichen, rostfreien Stahl, umschlungen. Diese Schußdrähte 14 verlaufen also etwa senkrecht zu den Kettdrähten 12, wobei jeder einzelne Schußdraht 14 abwechselnd die Ober- und die Unterseite von aufeinander folgenden Kettdrähten 12 berührt.

In Figur 1 sind der Durchmesser der Schußfäden 14 mit d, der Abstand zwischen zwei benachbarten Schußfäden 14 und damit die Filteröffnung mit µ und die Teilung, also der Abstand zwischen der Mitte eines Schußdrahtes 14 und der Mitte des anschließenden Zwischenraums zwischen zwei benachbarten Schußdrähten 14, mit t angegeben.

Zur Herstellung dieses Filtergewebes 10 werden die Schußdrähte 14 so dicht gewebt, daß der Abstand zwischen zwei aufeinander folgenden Schußdrähten 14 zu dem gewünschten Wert µ und damit zu der gewünschten Filteröffnung führt. Dabei ist der Durchmesser d der Schußdrähte 14 mindestens 1,5 mal so groß wie der Abstand µ und damit die Filteröffnung, d. h., es gilt:

$$d > 1,5 \, \mu$$

Bei Einhaltung dieser Beziehung zwischen dem Durchmesser d der Schußdrähte und der Größe der Filteröffnung µ, also dem Abstand zwischen benachbarten Schußdrähten 14, wird die Teilung t kleiner als der Durchmesser d der Schußdrähte 14; deshalb müssen die Schußdrähte 14 in den sich kreuzenden Drahtlagen so stark verformt werden und - abweichend vom üblichen kreisförmigen Querschnitt - dort einen etwa ovalen Querschnitt haben, wie man in Figur 3 erkennt, so daß die Schußdrähte 14 auch in den sich kreuzenden Drahtlagen nebeneinander Platz haben.

Figur 2 zeigt schließlich die räumliche Anordnung von sieben Schußdrähten 14 an einem Kettdraht 12, wobei vier Schußdrähte an der Oberseite und drei Schußdrähte an der Unterseite des Kettfadens 12 dargestellt sind.

Obwohl dieses Filtergewebe 10 also aus relativ dicken und damit kostengünstigen und wenig störungsanfälligen Schußdrähten 14 hergestellt wird, lassen sich extrem kleine Filteröffnungen $\mu$ realisieren.

Anwaltsakte 6103 /EU

11. Aug. 1983

Dürener Metalltuch

Schoeller, Hoesch GmbH u. Co.KG

5160 Düren

---

Filtergewebe aus Metalldrähten

---

### Patentansprüche

1. Filtergewebe aus Metalldrähten

a) mit dicken, parallel und im Abstand zueinander verlaufenden Kettdrähten, und

b) mit dünnen, die Kettdrähte abwechselnd an der Ober- und Unterseite umschlingenden, eng nebeneinander angeordneten Schußdrähten,

d a d u r c h   g e k e n n z e i c h n e t , daß

c) die Dicke (d) der Schußdrähte (14) größer als der Abstand ($\mu$) zwischen zwei benachbarten Schußdrähten (14) ist.

2. Filtergewebe nach Anspruch 1, dadurch gekennzeichnet, daß die Dicke (d) der Schußdrähte (14) mindestens 1,5 mal so groß wie der Abstand ($\mu$) zwischen zwei benachbarten Schußdrähten (14) ist.

3. Filtergewebe nach einem der Ansprüche 1 oder 2, dadurch gekennzeichnet, daß die Schußfäden (14) aus einem weichen Metall bestehen.

4. Filtergewebe nach Anspruch 3, dadurch gekennzeichnet, daß die Schußfäden (14) aus einem weichen, rostfreien Stahl bestehen.

FIG.2

FIG.1

FIG.3

14

14

14

12

A         B

14

10

14

t

μ

14

14

d

14

12

12

A         B

14

14

14

12

1/1

0133624

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 531 752 (D. FRIEDRICHS)<br>* Ansprüche 1,2; Figuren 1-4; Seite 3, Zeile 17 - Seite 4, Zeile 9; Seite 4, Zeile 12 - Seite 6, Zeile 22 *<br><br>--- | 1-4 | B 01 D  39/12<br>D 03 D  13/00 |
| A | DE-A-2 835 238 (BOLL & KIRCH FILTERBAU GmbH)<br>* Ansprüche 1,3,7; Figuren 1-4 *<br><br>----- | 1-4 | |

**RECHERCHIERTE SACHGEBIETE (Int. Cl. ³)**

B 01 D

Der vorliegende Recherchenbericht wurde für alle Patentansprüche erstellt.

| Recherchenort | Abschlußdatum der Recherche | Prüfer |
|---|---|---|
| DEN HAAG | 13-04-1984 | HOORNAERT P.G.R.J. |